# EUROPÄISCHE PATENTSCHRIFT

(11) **EP 2 875 721 B1**
(45) Veröffentlichungstag und Bekanntmachung des Hinweises auf die Patenterteilung: **11.01.2017**
(21) Anmeldenummer: 14003853.0
(22) Anmeldetag: 14.11.2014
(51) Int. Cl.: A01G 13/02

(54) **System für das schnelle Öffnen und Schliessen von Hagelschutznetzen**
System for the rapid opening and closing of hail protection nets
Système pour l'ouverture et la fermeture rapides de filets de protection anti-grêle

(30) Priorität: 20.11.2013 IT BZ20130058
(43) Veröffentlichungstag der Anmeldung: 27.05.2015
(73) Patentinhaber: POJER Srl, 39040 Cortina sulla Strada del Vino (IT)
(72) Erfinder: Pojer, Renzo, I-39040 Cortina sulla Strada del Vino (BZ) (IT)
(74) Vertreter: Oberosler, Ludwig

(56) Entgegenhaltungen:
- EP-A1- 2 625 950
- WO-A1-2012/175546
- DE-B4-102010 012 679
- DE-T2- 69 805 912

## Beschreibung

Die Erfindung bezieht sich auf ein mechanisches System für das schnelle Öffnen und Schließen von Hagelschutznetzen oder Schutzbahnen in der Land- oder Gartenwirtschaft, insbesondere in Baum- und Rebanlagen.

Die Praxis hat gezeigt, dass es bei Hagelschutzanlagen wichtig ist, dass die Schutznetze innerhalb kurzer Zeit in die aktive Abdeckposition, in ausgebreiteter Stellung, bzw. in die passive, eingeholte Position, gebracht werden können. Während der Wachstumszeit werden, durch das Anordnen der Netze in Abdeckposition, Schäden an den Früchten und an den Pflanzen verhindert. Nach erfolgter Ernte wird durch das Einholen der Netze, im Fall von Schneefall, das Überlasten der Netze und der Anlage, was oft die Ursache schwerer Schäden an der Stützstruktur und an den Pflanzen ist, verhindert.

Aus der DE 10 2010 012 679 B4 ist ein Hagelschutzsystem bekannt bei welchem die Netze, mittels dünner Kabel welche für jede Abdeckfläche mit einem gemeinsamen Betätigungskabel verbunden sind, durch Ziehen dieses Kabels in eine Richtung, ausgebreitet werden und, durch Ziehen des besagten Kabels in die andere Richtung, in die Nähe des Drahtes welcher über die oberen Enden der einzelnen Stützpfähle gespannt ist, eingeholt werden. Dieses System setzt voraus dass, zwecks Ausbreiten oder Einholen jedes einzelnen Netzes der entsprechende Kabel gezogen wird. Dieser Vorgang verursacht öfters, dass der Betätigungskabel selbst oder einer der vielen Übertragungskabel welche an verschienen, nicht zu weit voneinander entfernten, Punkten an der Längskante des Netzes wirken, verheddern und somit die Hilfe einer zweiten Bedienungsperson voraussetzen. Die genannten Arbeitsgänge, welche für mehrere Netzflächen der Schutzanlage wiederholt werden müssen, erfordern zu hohe Bedienungszeiten welche für die vollständige Abdeckung, insbesondere bei Hagelgefahr, notwendig sind; oft ist dies die Ursache von Schäden an der Anlage weil die Bedienungspersonen nicht in der Lage sind rechtzeitig die Abdeckung durchzuführen.

Aus der DE 698 05 912 ist weiters ein System zum Aufrollen von Schutzbahnen, insbesondere in Rebanlagen, bekannt. Das System verwendet Aufroll-Stangen welche in einem Schutzgehäuse gelagert sind. Während des Herausziehens der Bahn wird eine Feder geladen welche das Einholen der Bahn bewirkt, sobald diese freigelassen wird. Die Wirkungsweise dieses Systems ist identisch mit dem bekannten System für die vertikalen Sonnenschutzblenden, das Spannen der Bahn wird von der geladenen Feder übernommen. Bei Hagelgefahr muss jede einzelne Bahn ausgezogen und in ausgezogener Position arretiert werden, dies bringt, im Falle vieler Bahnen an einer landwirtschaftlichen Anlage, zu lange Zeiten mit sich. Weiters sehen diese Bahnen nicht ein Entladen des Hagels in Richtung Boden vor, wodurch sie Beschädigungen ausgesetzt sind, bzw. wodurch die Stützstruktur durch Überbelastung zusammenbrechen kann.

Aus der WO 2012/175546 A1 ist ein Schutzsystem mit mechanischer Abdeckung einer Anlage mit Pflanzreihen bekannt welche eine Stützstruktur, bestehend aus vertikalen Pfählen und aus parallel und quer zu den Pflanzreihen gespannten Drähten, besteht; über die gespannten Drähte werden Schutzbahnen oder Netze gespannt indem diese von einer, seitlich der Anlage vorgesehenen, Stange abgewickelt werden und bis zur gegenüberliegenden Seite, mittels dünner Kabel welche an der Querseite der Bahn, bzw. des Netzes, befestigt sind, durch Aufwickeln an einer Stange an der gegenüberliegenden Seite der Abnlage gezogen werden. Der mittlere Längsbereich jedes der Netze gleitet dabei über die oberen Enden der vertikalen Pfähle und über einen Draht welcher über die besagten Pfahlenden gespannt ist während die quer gespannten Drähte in einem Bereich unterhalb dieses Drahtes verlaufen. Dieses System benötigt, in Abhängigkeit der Länge der Netze, lange Ausbreit- und Einhohlzeiten. Das Risiko eines Verhedderns ist groß weil die stirnseitigen dünnen Zugkabel und der stirnseitige Querrand jedes einzelnen Netzes sich leicht in den darunterliegenden Drähten verhängen können. Die Netze oder Bahnen sind einer hohen Abnützung durch Scheuern während des Gleitens über die Pfahlenden und über die Querdrähte ausgesetzt. Weiter bringt der Unterschied des Durchmessers an der Aufwickelseite und an der Abwickelseite mit sich, dass die Spannung des Netzes sehr unterschiedlich ist. Die Netze sind gegen die Wirkung des Windes nicht gesichert.

Die Erfindung stellt sich die Aufgabe ein System für das schnelle Öffnen und Schließen von Hagelschutznetzen, Schutzbahnen oder dergleichen der obgenannten Art in der Land- oder Gartenwirtschaft zu schaffen, wobei es einer einzigen Person ermöglicht in kurzer Zeit das vollständige Schließen, bzw. das vollständige Öffnen, aller Netze, auch an sehr ausgedehnten Anlagen mit einer beachtenswerten Anzahl von Netzen oder Bahnen, durchzuführen, wobei eine Abdeckung über den Pflanzreihen und den Durchgängen zwischen diesen oder eine Abdeckung beider Seitenflächen der einzelnen Pflanzreihen erfolgt.

Zur Lösung dieser Aufgabe schlägt die Erfindung ein Auf- und Abrollsystem vor welches gleichzeitig auf die einzelnen Netze der ganzen oder eines Teiles der Anlage wirkt, wobei die Netze auf zueinander und zu den Pflanzreihen parallel verlaufenden paarweise angeordneten Stangen auf- und abgerollt werden welche drehbar im Bereich der oberen Enden der einzelnen vertikalen Pfähle der bekannten Stützstruktur, bzw. an den Drähten welche über die besagten oberen Enden der Pfähle verlaufen, gelagert sind. An den Enden der Pflanzreihen und eventuell auch in Zwischenpositionen sind Trägerprofile vorgesehen welche quer zu den Pflanzreihen und zu den besagten drehbaren Stangen angeordnet sind, wobei die mit Zahnrad versehenen Enden der Stangen, drehbar an den Trägerprofilen gelagert sind. Sämtliche Zahnräder sind durch eine Kette oder einem Zahnriemen verbunden welcher durch einen Motor oder über eine Handkurbel mit Untersetzungsgetriebe bewegt wird. Die einzelnen Schutznetze welche jeweils die gesamte Breite zwischen den Pflanzreihen, bzw. die Breite zwischen zwei benachbarten Stützpfählen, abdecken sind längs einem der Längsränder an einer drehbaren Stange befestigt während der gegenüberliegende Längsrand mittels dünner Kabel oder Bänder welche an, unter sich beabstandeten, Punkten befestigt sind, mit der zweiten entsprechenden drehbaren Stange verbunden ist. Bei ausgebreitetem Netz ist dieses vollständig oder wesentlich von der Stange an welcher es dem gesamten Längsrand befestigt ist abgerollt, während an der Gegenseite die dünnen Kabel oder Bänder an der zweiten entsprechenden Stange aufgerollt sind. Durch die synchronisierte Drehung in die selbe Richtung der beiden besagten Stangen, bewirkt durch Bewegen der Kette über die entsprechenden Zahnräder, wird das Netz eingeholt, wobei dieses an der Stange an welcher der Längsrand befestigt ist aufgerollt wird, während gleichzeitig die dünnen Kabel oder Bänder von der entsprechenden zweiten Stange abgewickelt werden. Für jedes Netz werden also zwei drehbare, zueinander parallele, Stangen benötigt. Um die Spannung des Netzes und ein reguläres Auf- und Abrollen zu sichern, sind vorteilhafterweise die dünnen Kabel oder Bänder leicht unter Zug was dadurch erreicht wird, dass elastische dünne Kabel oder Bänder oder solche mit einem elastischen Abschnitt oder einer Feder verwendet werden. Um ein gleichmäßiges Aufrollen mit gut anliegenden Schichten zu gewähren, schlägt die Erfindung den Einsatz starrer C-förmiger Halter vor deren beide Enden eine Einlauföffnung bilden welche mit einer Einlaufausformung oder einer Einlaufrolle versehen ist um das Netz, während des Einlaufens ins Innere der C-förmigen Halter, bzw. während der Ausziehphase, nicht zu beschädigen. Die besagten C-förmigen Halter können an den oberen Enden der jeweiligen Pfähle der Stützstruktur oder an den gespannten Drähten welche über diese besagten Enden und parallel zu den Pflanzreihen verlaufen, befestigt sein. Natürlich sind im Bereich jeder der Pflanzreihen Halter mit zwei C-förmigen Aufnahmen vorgesehen um die Netze, welche die gesamte Breite rechts und links der Pflanzreihe abdecken, aufnehmen zu können; auch im Bereich der äußersten seitlichen Pflanzreihen der Anlage werden Halter mit zwei C-förmigen Aufnahmen eingesetzt, wobei eine davon das seitlich, schräg in Richtung Boden verlaufende Netz, welches als seitliche Schutzabdeckung dient, aufzunehmen.

Um die Überbeanspruchung der Netze im Fall von Hagel zu vermeiden, sind diese im mittleren Längsbereich, entsprechend der freien Fahrbahn zwischen den Pflanzreihen, mit Längsöffnungen versehen durch welche der Hagel, infolge Gleiten in Richtung dieser Öffnungen welche, wegen der Belastung durch den Hagel, tiefer liegen als die Längsränder des Netzes welche an den drehbaren Stangen gehalten werden, auf den Boden fallen kann.

Im Fall langer Pflanzreihen ist es notwendig, um Funktionsstörungen wegen elastischer Verformung durch Drehbelastung an den einzelnen drehbaren Stangen auszuschließen, dass ab bestimmter Längen, Querprofile eingesetzt werden welche identisch oder ähnlich wie jene an den Enden der Pflanzreihen sind. Auf diese Weise können im Bereich dieser Querprofile an den drehbaren Stangen Zahnräder angebracht werden welche über eine Kette verbunden sind und von einem Motor angetrieben werden welcher autonom oder synchron mit andern Motoren der Anlage gesteuert wird. Der Antriebssynchronismus wird durch eine zentrale, z.B. elektrische oder hydraulische, Einspeisung und Steuerung erreicht oder indem Übertragungswellen vorgesehen werden welche die einzelnen Motoren oder handbetriebenen Mechanismen verbinden. Insbesondere in diesem letzteren Fall kann die Übertragungswelle als seitliche Stange für das Aufrollen der Netze genutzt werden. Um Beschädigungen wegen Überlastung oder Hemmungen an den drehbaren Stangen und/oder an den Übertragungswellen und/oder an den Antriebsmechanismen zu vermeiden sind bekannte Sollbruchelemente oder elastische Kupplungselemente vorgesehen.

Alternativ zum obgenannten System schlägt die Erfindung vor, dass die Spannung jedes einzelnen Netzes dadurch gesichert wird, dass an den dünnen Kabeln oder Bändern, welche unter sich beabstandet an jenem Längsrand des Netzes befestigt sind welche dem an der drehbaren Stange befestigten Längsrand gegenüberliegt, Gewichte oder Federn wirken. In diesem Fall wird eine zweite drehbare Stange nicht benötigt, die dünnen Kabel oder Bänder laufen über Umlenkelemente oder Rollen und die Gewichte laufen eventuell in vertikalen Rohren welche an den Pfählen befestigt sind. Im Fall der Anwendung von Federn sind diese an den Pfählen oder Drähten der Pflanzreihe befestigt welche anliegend an jener Pflanzreihe verläuft über welcher die drehbare Stange für das Auf- und Abrollen des Netzes gelagert ist. Vorteilhafterweise deckt in diesem Fall jedes vollständig ausgebreitete Netz den Bereich von der Mittellinie des Durchgangs bis zur Mittellinie der Pflanzreihe ab. Der Bereich der Entleerung des Hagels ist der Mittelbereich des Durchgangs zwischen den Pflanzreihen wo sich die Längsränder der Netze eventuell etwas überdecken, auf diese Weise ist jedes Netz autonom was das Entladen des Hagels betrifft. Um eine Überlastung der Netze auszuschließen kann jede drehbare Stange mit einer tarierten Schleifkupplung versehen sein. Um die Längsspannung der einzelnen Netze zu sichern sind diese an den zwei Ecken an den Enden des, durch Gewichte, Federn oder elastische Elemente, belasteten Längsrandes mit einer oder mit mehreren Rollen ausgestattet welche in einem Führungsprofil laufen das an den Querprofilen für die Lagerung der drehbaren Stangen befestigt ist oder in einer mehr oder weniger zum Boden geneigten Stellung quer zur Längserstreckung des Netzes vorgesehen ist. Zwischen dem Netz und den besagten Rollen können elastische Elemente und/oder bekannte Elemente zur Einstellung der Spannung vorgesehen sein.

Die Erfindung wird, anhand eines in den beigelegten Zeichnungen zwei schematisch dargestellten, vorzuziehenden Ausführungsbeispielen eines erfindungsgemäßen Systems für das schnelle Öffnen und Schließen von Hagelschutznetzen näher erklärt, dabei erfüllen die Zeichnungen rein erklärenden, nicht begrenzenden Zweck.

Die Fig. 1 zeigt in Vorderansicht drei Pflanzreihen und die erfindungsgemäße Vorrichtung für das schnelle Öffnen und Schließen der Hagelschutznetze, dabei sind die vertikalen Stützpfähle am oberen Ende mit einem Lager-Querprofil für drehbare Stangen welche an den Enden mit Zahnrädern ausgestattet sind versehen, die Zahnräder werden über eine einzige Kette von einem einzigen Antriebsmotor bewegt.

Die Fig. 2 zeigt in Draufsicht die in Fig. 1 dargestellte Vorrichtung mit den vollständig im Bereich der Fahrbahn A zwischen zwei Pflanzreihen und im Seitenbereich L an der äußersten rechten Längsseite der Anlage ausgebreiteten Hagelschutznetzen, das Hagelschutznetz entsprechend der Fahrbahn B ist als Beispiel nur teilweise in ausgebreiteter Position.

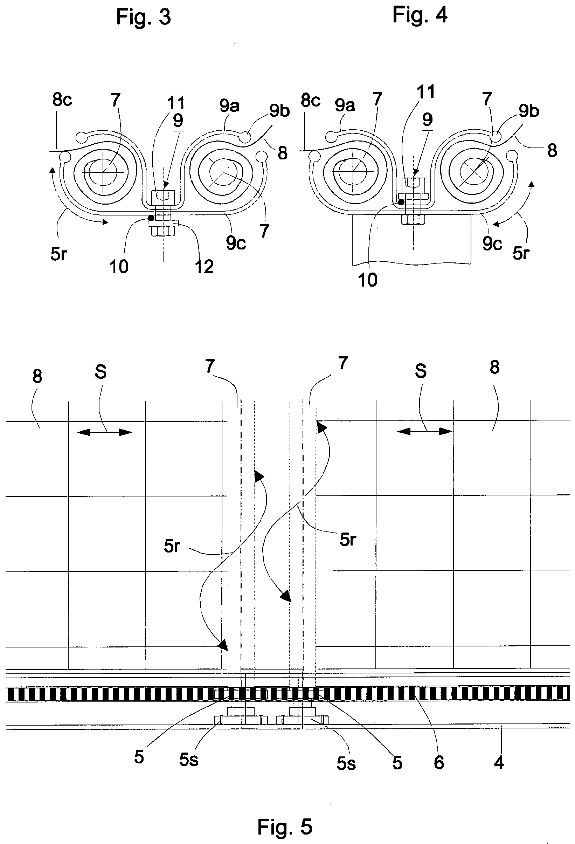

Die Fig. 3 zeigt in Vorderansicht einen Halter mit doppelter C-förmiger Aufnahme für die drehbaren Stangen mit teilweise aufgerollten Netzen, wobei der Halter an einem gespannten Draht befestigt ist.

Die Fig. 4 zeigt in Vorderansicht einen Halter mit doppelter C-förmiger Aufnahme für die drehbaren Stangen mit teilweise aufgerollten Netzen, wobei der Halter am oberen Ende eines vertikalen Stützpfahles befestigt ist.

Die Fig. 5 zeigt in Draufsicht das Detail der Lagerung der Enden zweier drehbarer Stangen welche mittels Zahnräder und Kette angetrieben sind.

Die Fig. 6 zeigt die Vorderansicht einer erfindungsgemäßen Vorrichtung, wobei jedes der an einer drehbaren Stange aufrollbaren Netze durch Gewichte in Spannung gehalten wird welche mittels dünner Kabel an jener Längssite des Netzes befestigt sind welche der, an der drehbaren Stange befestigten, Längskante gegenüberliegt; die Netze sind alle in vollkommen ausgebreiteter Position.

Die Fig. 6a zeigt die Draufsicht auf einen Teil der in Fig. 6 gezeigten Vorrichtung mit ausgebreiteten Netzen.

Die Fig. 6b zeigt in Draufsicht das Detail der Führung des Eckbereiches des Netzes mittels Rollen welche innerhalb einer Führungsschiene laufen welche am Querprofil für die Lagerung der drehbaren Stangen befestigt ist.

Die Fig. 7 zeigt die Vorderansicht der in Fig. 6 dargestellten Vorrichtung mit den Netzen in eingerollter Position.

Die Fig. 7a zeigt die Draufsicht auf einen Teil der in Fig. 7 gezeigten Vorrichtung mit eingerollten Nezen.

Die Fig. 8 zeigt die Vorderansicht einer Pflanzreihe mit einer erfindungsgemäßen Vorrichtung mit seitlich vertikal ausbreitbaren Netzen welche in ausgerollter Position die Pflanzreihe seitlich abdecken.

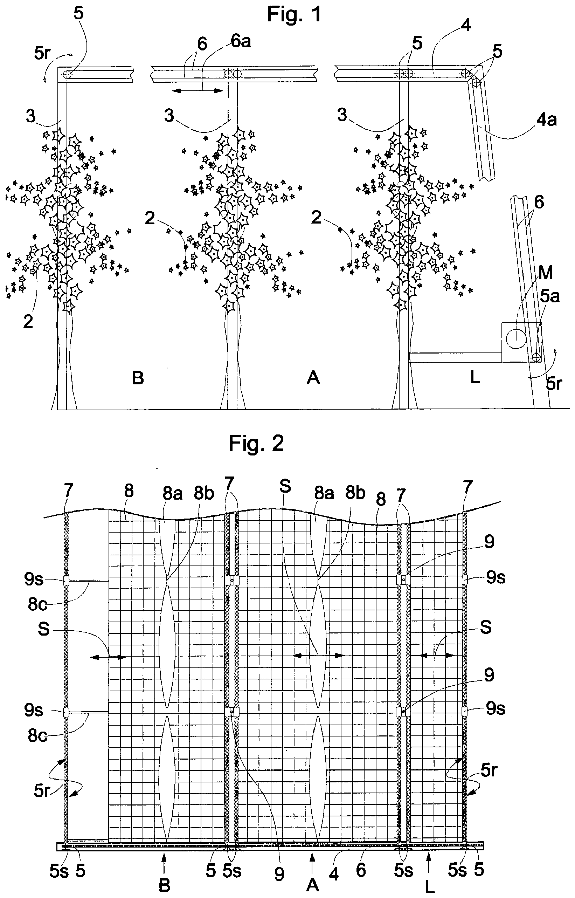

An einer Stützstruktur bekannter Art für Hagelschutznetze welche aus, im Bereich der Reihen der Pflanzen 2 in den Boden gerammten, vertikalen Stützpfählen 3, aus zu den Pflanzreihen parallelen, über die oberen Enden der Pfähle 3 gespannten Metalldrähten 10, aus nicht dargestellten, zu den ersten quer verlaufenden Metalldrähten und aus schrägen, am Boden 1 verankerten Metalldrähten besteht, sind die Netze 8 angebracht welche die Fahrbahnen A, B samt den Pflanzreihen und die Seitenbereiche L an den äußeren Längsseiten der Anlage abdecken. Jedes der besagten Netze 8 ist zwischen zwei Stangen 7 gespannt welche zu den Pflanzreihen parallel verlaufen und drehbar 5r an Querprofilen 4 gelagert sind welche an den oberen Enden der vertikalen Stützpfähle 3 im Endbereich der Pflanzreihen befestigt sind und zu diesen quer verlaufen. Die besagten Querprofile 4 weisen Lager 5s für die drehbare 5r Lagerung der Stangen 7 auf welche an den Enden mit einem Zahnrad 5 versehen sind das über eine einzige Kette 6 angetrieben wird welche von einem Motor M mit Antriebsritzel 5a bewegt wird. Jedes der Netze 8 ist einseitig, dem gesamten Längsrand entlang, an einer der drehbaren 5r Stangen 7 befestigt welche im Bereich der Pflanzreihe vorgesehen sind während es am entgegengesetzten Längsrand entlang mittels einer Reihe, zueinander beabstandeter dünner Kabel oder Bänder 8c an einer entsprechenden drehbaren 5r Stange 7 befestigt ist welche im Bereich der benachbarten Pflanzreihe vorgesehen ist so dass bei ausgebreitetem Netz 8 die Hälfte der beiden Pflanzreihen und die Fahrbahnen A, B zwischen den Pflanzreihen, bzw. der Seitenbereich L abgedeckt wird (Fig. 2). Das vom Motor M angetriebene Antriebsritzel 5a bewirkt die Bewegung 6a der Kette 6 wodurch die Zahnräder 5 an den einzelnen Stangen 7 gedreht 5r werden um das Verschieben S der Netze 8 durch Aufrollen oder Abrollen auf, bzw. von, einer der Stangen 7 zu erreichen während an der zweiten entsprechenden Stange 7 synchron das Abwickeln, bzw. das Aufwickeln der dünnen Kabel oder Bänder 8c erfolgt.

An den äußeren Längsseiten der Anlage ist, bei vollständig ausgebreitetem Netz 8, dieses vollständig von der Stange 7, an welcher es dem Längsrand entlang direkt befestigt ist, abgerollt während an der entsprechenden zweiten Stange 7 die dünnen Kabel oder Bänder aufgerollt sind welche, zueinander beabstandet am gegenüberliegenden Längsrand des selben Netzes 8 befestigt sind. Vorteilhafterweise sind die besagten dünnen Kabel oder Bänder elastisch, mit einem elastische Abschnitt oder einer Feder versehen um das Netz 8 immer unter Spannung zu halten und ein kompaktes regelmäßiges Auf- und Abrollen zu sichern.

Um die besagten drehbaren 5r Stangen 7 in den mehreren Zwischenbereichen zu unterstützen und ein gleichmäßiges Auf- und Abrollen des Netzes 8 zu erreichen, schlägt die Erfindung vor, an den oberen Enden der vertikalen Stützpfähle und auch an den gespannten Drähten welche über die besagten Enden verlaufen, Halter 9 anzubringen welche aus einem unteren Teil 9c und einem oberen Teil 9a bestehen und in zusammengebauter Position zwei C-förmige Aufnahmen bilden welche an den Einlaufbereichen eine Einlaufausformung 9b oder Rollen aufweisen um dadurch den Durchgang des Netzes 8 während des Auf- und Abrollens zu begünstigen ohne dass dabei Beschädigungen auftreten. Die Befestigung der besagten Halter 9 an den oberen Enden der vertikalen Stützpfähle 3 kann durch Schrauben 11, z.B. mittels Dübel, erfolgen während die Befestigung an den gespannten Drähten 10 mittels Klemme 12 mit Schraube 11 erfolgt. Im seitlichen Bereich der Anlage können Halter 9s mit nur einer C-förmigen Aufnahme verwendet werden.

Die vom Antriebsritzel 5a des Motors M bewegte Übertragungskette 6 läuft mit einem Teil über sämtliche in den Lagern 5s am Querprofil 4 drehbaren 5r Stangen 7 verbundenen Zahnrädern 5, während der zweite Teil der selben Kette 6 vorteilhafterweise unter den selben Zahnrädern 5 verläuft und dabei durchgehend am Profil aufliegt oder über Rollelemente oder Stützrollen läuft welche den Eingriff im unteren Bereich an den Zahnrädern sichern; vorteilhafterweise ist entlang der Kette 6 mindestens ein Kettenspanner vorgesehen.

Die Erfindung schließt nicht aus dass, an Stelle des Querprofils 4 mit durchgehend gleichmäßigem Querschnitt, im Bereich der Lagerung der Stangen 7 und der entsprechenden Zahnräder, spezifische Lagerungen vorgesehen sind welche an den vertikalen Stützpfählen befestigt sind, während die Verbindung zwischen diesen Lagerungen mittels eines oder mehrerer Profile erfolgt über welches oder in welchem die Kette 6 läuft.

Längs der drehbaren 5r Stangen 7 können, zueinander beabstandet, mehrere Querprofile 4mit Zahnrädern 5 vorgesehen sein um so zu sichern, dass die besagten durchgehenden oder, im Bereich der dazwischenliegenden Querprofile 4, unterbrochenen Stangen 7 die selbe Drehung ausführen welche den Zahnrädern am Stangenanfang übertragen wird, ohne dass dabei eine elastische Verformung durch Torsion auftretet. Um dies sicherzustellen müssen natürlich in diesem Fall bei, im Bereich der dazwischen vorgesehenen Querprofile 4, nicht unterbrochenen Stangen 7, die Antriebsmotoren M synchronisiert sein, bzw. mechanisch durch Übertragungswellen verbunden sein welche eventuell auch als Stangen 7 zum Aufrollen dienen können.

Die einzelnen Netze 8 können im mittleren Längsbereich Längsöffnungen 8a mit unter sich beabstandeten Verbindungsstellen 8b aufweisen um eine Verformung des belasteten Netzes und somit ein Entleeren des Hagels in Richtung Boden zu begünstigen.

Die Erfindung schließt eine Anordnung der Netze wie eine geneigte Dachfläche und/oder die Anordnung der drehbaren 5r Stangen 7 in übereinander liegender oder versetzter Position nicht aus, um auch den minimalen Durchgang für den Hagel zwischen den Stangenpaaren zu verhindern, natürlich müssen in diesem Fall auch die entsprechenden Zahnräder 5 und die Halter 9 mit den C-förmigen Aufnahmen übereinander, bzw. versetzt, angeordnet werden.

Die Erfindung schließt nicht aus, dass der untere Teil 9c und insbesondere der obere Teil 9a der Halter 9 aus Blech oder aus Kunststoff hergestellt ist um so eine schützende Hülle für die Netze 8 in aufgerollter Stellung zu erhalten.

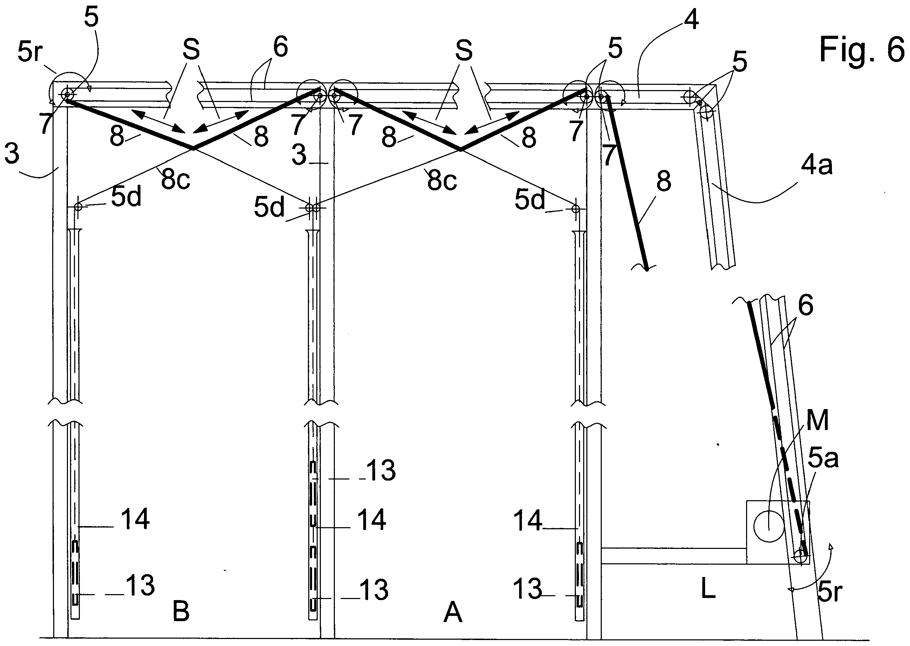

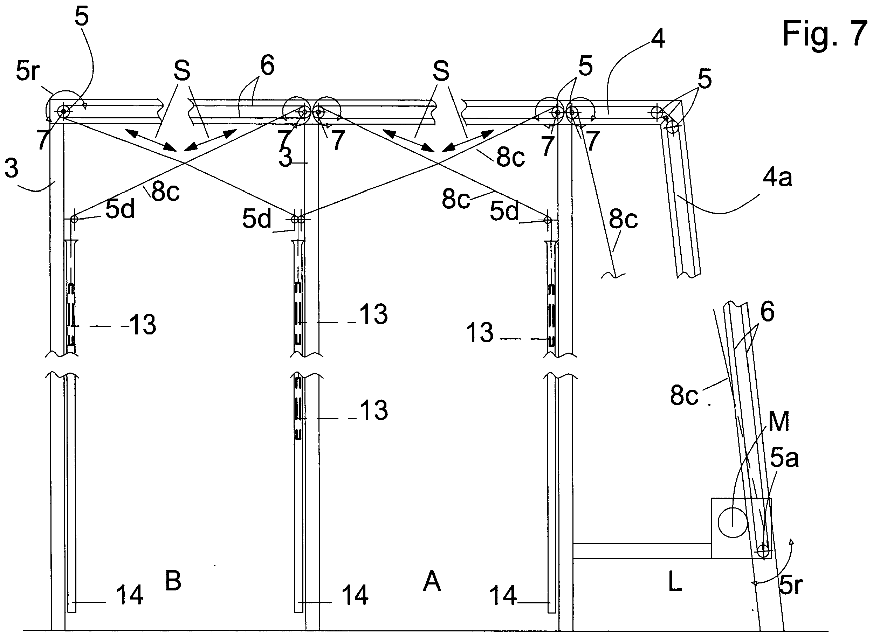

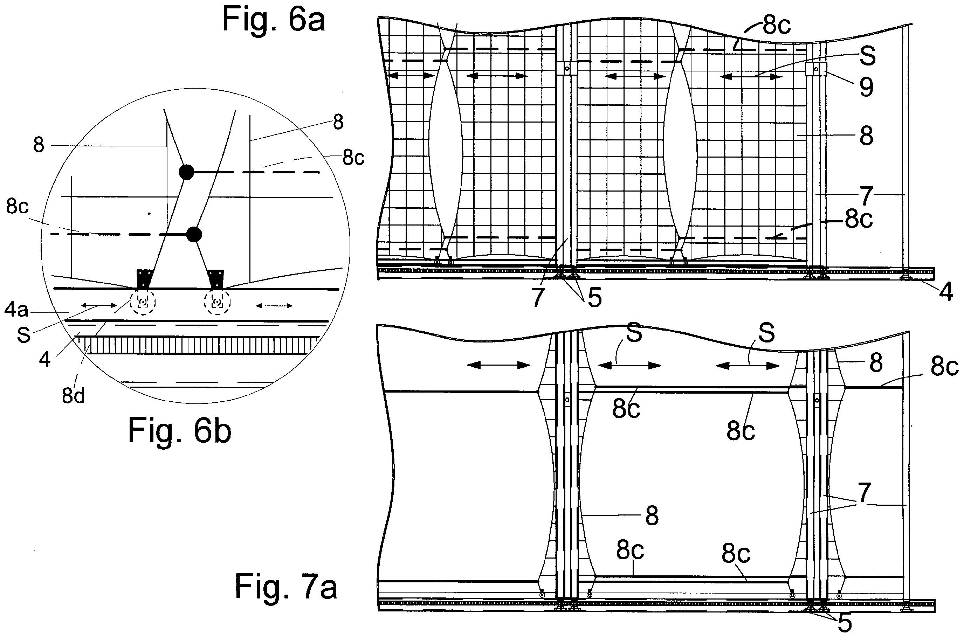

Erfindungsgemäß können die dünnen Kabel oder Bänder 8c, an Stelle dass sie an der drehbaren Stange 7 aufgerollt werden welche mit jener Stange ein Paar bildet an welcher das Netz 8 aufgerollt wird, mit Gewichten 13, Federn oder elastischen Elementen ausgestattet sein welche innerhalb Rohren untergebracht sind welche z.B. an den vertikalen Pfählen 3 befestigt sind. In diesem Fall können die Netze 8 horizontal oder wie Dachflächen geneigt verlaufen, wobei vorteilhafterweise die Längsränder zwei benachbarter Netze sich im Mittelbereich zwischen den zwei Pflanzreihen begegnen und eventuell sich leicht überdecken. Die dünnen Kabel 8c oder Bänder können über Umlenkelemente oder Umlenkrollen 5d geführt werden. Es wird nicht ausgeschlossen dass, im Fall elastischer oder mit Federn ausgestatteter dünner Kabel 8c oder Bänder, die Enden dieser an den entsprechenden vertikalen Pfählen 3 oder an den gespannten Drähten der, mit Stange 7 zum Aufrollen des Netzes 8 versehenen Pflanzreihe, anliegenden Pflanzreihe (Fig. 6, 6a; 7, 7a) befestigt sind. In diesem Fall sind, zwecks Längsspannung der einzelnen Netze 8, an den beiden Eckbereichen an den Enden des Längsrandes des Netzes an welchem Gewichte 13, Federn oder elastische Elemente wirken, über ein elastisches Element und/oder über ein Element zur Einstellung der Spannung, eine oder mehrere Rollen 8d angebracht welche in einem Führungsprofil 4a laufen S welches z.B. am Querprofil 4 für die Lagerung der drehbaren 5r Stangen 7 befestigt ist.

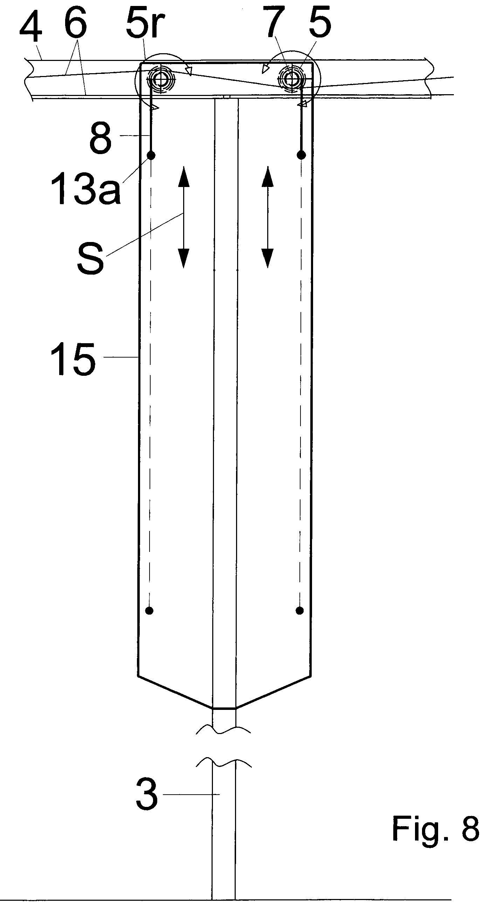

Das System zum Ausbreiten und Einrollen des Netzes 8 mittels nur einer drehbaren Stange 7 mit Spannen des Netzes mittels Gewichte oder elastischer Elemente welche an jenem Längsrand wirken welcher dem, an der drehbaren Stange 7 befestigten, Längsrand gegenüberliegt, ist für den Schutz von Anlagen mit wesentlich vertikal gezogenen Pflanzen, z.B. Reben oder Bäume in "Palmettenform" (Fig. 8), geeignet. In diesem Fall sind die Netze 8 seitlich jeder Pflanzreihe angeordnet wobei sie von den beiden Stangen 7 abgerollt werden welche im oberen Bereich jeder Pflanzreihe, zueinander parallel, angeordnet sind. Vorteilhafterweise ist jener Längsrand, welcher gegenüber dem Längsrand sich erstreckt welcher an der drehbaren Stange 7 befestigt ist, mit einem Gewicht 13 a versehen welches z.B. die Form einer Stange hat. Um zu verhindern dass, z.B. bei Wind, die Netze 8 sich von den Pflanzen der Pflanzreihe entfernen, sind entlang der Längserstreckung des Netzes 8, unter sich beabstandete Rückhalterahmen 15 angeordnet welche vertikale Stangen oder Rohre aufweisen an welchen eventuell, die am unteren freien Längsrand des Netzes befestigten Gewichte oder Stangen 13a, gleitend geführt sind.

## Patentansprüche

1. System für das Öffnen und Schließen von Hagelschutznetzen, Schutzbahnen oder dergleichen in landwirtschaftlichen Anlagen welche eine Stützstruktur, bestehend aus vertikalen Pfählen, aus parallel zu den Pflanzreihen verspannten Drähten, aus quer zu diesen Pflanzreihen verspannten Drähten, aus geneigt angeordneten und am Boden verankerten Drähten und aus Netzen oder Bahnen bestehen, wobei diese über den Pflanzen ausbreitbar, bzw. durch Aufrollen einholbar sind, **dadurch gekennzeichnet, dass** jedes der einzelnen Netze (8) zwischen einem Paar von Stangen (7) angeordnet ist welche an beiden Enden drehbar (5r) an Querprofilen (4), welche quer zu den Pflanzreihen und den Netzen (8) verlaufen, gelagert (5s) sind und dass jedes der Netze (8) entlang einem der Längsränder an einer der Stangen (7) befestigt ist während der gegenüberliegende Längsrand mit dünnen, unter sich beabstandeten, Kabeln oder Bänder (8c) versehen ist deren zweites Ende an der entsprechenden drehbaren Stange (7) befestigt ist.

2. System für das Öffnen und Schließen gemäß Anspruch 1, **dadurch gekennzeichnet, dass** die dünnen Kabel (8c) oder Bänder welche an jenem Längsrand des Netzes angebracht sind der dem, an der drehbaren Stange (7) befestigten, Längsrand gegenüberliegt, mit Gewichten (13), mit Federn oder mit elastischen Elementen ausgestattet sind um das Netz (8), während des Auf- und Abrollens an der drehbaren (5r) Stange (7), in horizontaler Position, in geneigter Position wie eine Dachfläche oder in vertikaler Position in gespanntem Zustand zu halten, wobei die dünnen Kabel (8c) oder Bänder über Umlenkelemente oder Umlenkrollen (5d) geführt werden welche in einer zur drehbaren (5r) Stange (7) entsprechenden Position vorgesehen sind und dass an den beiden Eckbereiche an den Enden jenes Längsrandes der Netze (8) auf welchen die Gewichte (13), die Federn oder elastische Elemente wirken, über elastische Elemente oder Elemente zur Einstellung der Spannung, eine oder mehrere Rollen (8d) befestigt sind welche in einem Führungsprofil (4a) laufen (S) welches quer zur Längserstreckung des Netzes an der Stützstruktur angeordnet ist..

3. System für das Öffnen und Schließen gemäß Anspruch 1, **dadurch**
**gekennzeichnet dass**, im Fall des vertikalen Ausrollens des Netzes (8), dieses direkt, an jenem Längsrand welcher dem an der drehbaren (5r) Stange (7) befestigten Längsrand gegenüberliegt, mit Gewichten (13a) versehen ist und dass die besagten Gewichte (13a) gleitend an den vertikalen Abschnitten von Rückhalterahmen (15) geführt sind welche zueinander beabstandet längs jeder Pflanzreihe an der Stützstruktur befestigt sind.

4. System für das Öffnen und Schließen gemäß Anspruch 1, **dadurch gekennzeichnet, dass** die drehbar (5r) gelagerten (5s) Stangen (7) mindestens an einem der Enden oder an mindestens einem Mittelbereich mit einem Zahnrad (5) versehen sind auf welches eine Kette (6) wirkt welche von einem Motor (M) angetrieben oder einer Bedienungsperson mittels Handkurbel und Untersetzungsgetriebe bewegt wird, dass eine einzige Kette (6) auf mehrere Zahnräder (5) wirken kann um die synchrone Drehung für mehrere Stangenpaare (7) zu sichern und dass, im Fall mehrerer Motoren (M) oder manuell betätigter Antriebsgruppen, diese untereinander über eine Übertragungswelle mechanisch verbunden sein können.

5. System für das Öffnen und Schließen gemäß Anspruch 1, **dadurch gekennzeichnet, dass** die dünnen Kabel oder Bänder (8c) aus elastischem Werkstoff sind oder dass ein Abschnitt dieser aus elastischem Werkstoff oder aus einer Zugfeder besteht oder dass das Netz (8) und/oder dessen Webkante in Bewegungsrichtung (S) elastisch verformbar ist.

6. System für das Öffnen und Schließen gemäß Anspruch 1, **dadurch gekennzeichnet, dass** im Bereich der drehbaren (5r) Stangen (7), unter sich beabstandete Halter (9) vorgesehen sind welche aus einem unteren Element (9c) und einem oberen Element (9a) bestehen welche C-förmige Aufnahmen bilden die geeignet sind um die besagten Stangen (7) samt dem aufgerollten Netz (8) aufzunehmen und dass die besagten Halter (9) an den oberen Enden der vertikalen Stützpfähle (3) und/oder am, über die besagten oberen Enden verlaufenden, gespannten Draht (10), befestigt sind.

7. System für das Öffnen und Schließen gemäß Anspruch 6, **dadurch gekennzeichnet, dass** die Halter (9) für die Stangen (7) und dem aufgerollten Netz (8) aus einem oberen, die gesamte Länge der Stange und des Netzes abdeckenden, Teil (9a) und aus einem unteren, die Stange und das Netz abdeckenden, Teil (9c) besteht.

8. System für das Öffnen und Schließen gemäß Anspruch 6 oder 7, **dadurch gekennzeichnet dass** die beiden C-förmigen Aufnahmen der Halter (9) eine seitlich anliegende, eine überlagerte oder eine zueinander versetzte Position einnehmen können.

9. System für das Öffnen und Schließen gemäß Anspruch 1, **dadurch gekennzeichnet, dass** die Netze (8) horizontal oder gleich schräger Dachflächen angeordnet sein können.

10. System für das öffnen und Schließen gemäß Anspruch 4, **dadurch gekennzeichnet, dass** im Fall mehrerer Motoren (M) welche mehrere Stangenpaare bewegen, die Motoren mechanisch, elektrisch oder hydraulisch so verbunden sind dass sie synchron arbeiten.

11. System für das Öffnen und Schließen gemäß Anspruch 1, **dadurch gekennzeichnet, dass** die einzelnen Netze (8), im mittleren Längsbereich, zwecks Entladen des Hagels in Richtung Boden, Öffnungen (8a) mit zueinander beabstandeten Verbindungsstellen (8b), aufweisen.

## Claims

1. A system for opening and closing hail protection nets, protective webs and the like in agricultural plants, including a support structure, comprising vertical pales, wires being tensioned parallel to the plant rows, wires being tensioned transversally to said plant rows, wires being arranged inclined and anchored to the ground, and nets or webs, wherein those can be spread over the plants or brought in by rolling, **characterized in that** every single net (8) is arranged between a pair of rods (7) rotatably (5r) supported (5s) on both ends on transverse profiles (4) running transversally to the plant rows and the nets (8), and **in that** every net (8) is mounted along one of the longitudinal edges on one of the rods (7) while the opposite longitudinal edge is provided with thin cables or bands (8c) which are spaced below each other whose second end is fixed to the respective rotatable rod (7).

2. The system for opening and closing hail protection nets according to claim 1, **characterized in that** said thin cables (8c) or bands which are mounted to said longitudinal edge opposite to the longitudinal edge are mounted to the rotatable rod (7) being equipped with weights (13), with springs or resilient elements, to hold the net (8) during rolling and unrolling on the rotatable (5r) rod (7) in a horizontal position, in an inclined position like a rooftop or in a vertical position under tension, wherein said thin cables (8c) or bands are being guided via diverter elements or diverter pulleys (5d) which are provided in a respective position in relation to the rotatable (5r) rod (7), and **in that** in both corner regions at the ends of said longitudinal edge of the net (8) on which said weights (13), springs or resilient elements act, one or more pulleys (8d) are mounted via resilient elements or elements for setting the tension, wherein said pulleys run (S) in a guiding profile (4a) arranged transversally to the longitudinal extension of said net at the support structure.

3. The system for opening and closing hail protection nets according to claim 1, **characterized in that** when vertically unrolling the net (8) such net being equipped with weights (13a) directly at said longitudinal edge opposite to the longitudinal edge mounted to the rotatable (5r) rod (7), and **in that** said weights (13a) being slidably guided on the vertical parts of retention frames (15) which are mounted to the support structure with spaces there between longitudinally to each plant row.

4. The system for opening and closing hail protection nets according to claim 1, **characterized in that** the rotatably (5r) supported (5s) rods (7) are provided with a gearwheel (5) at least at one of the ends or at least at one intermediate region, wherein a chain (6) driven by a motor (M) or moved by an operator by means of a crank handle and a reduction gear, acts upon the gearwheel, **in that** a single chain (6) can act upon multiple gearwheels (6) to ensure synchronous rotation for multiple pairs of rods (7), and **in that** in case of multiple motors (M) or manually actuated drive groups such can be mechanically interconnected by means of a transmission shaft.

5. The system for opening and closing hail protection nets according to claim 1, **characterized in that** said thin cables or bands (8c) comprise a resilient material or **in that** a part of them comprises a resilient material or a tension spring or **in that** said net (8) and/or its selvage is resiliently deformable in the direction of motion (S).

6. The system for opening and closing hail protection nets according to claim 1, **characterized in that** holders (9) with spaces underneath each other are provided in the area of the rotatable (5r) rods (7), wherein such holders consist of a lower element (9c) and an upper element (9a) forming C shaped receptacles capable of accepting said rods (7) including the rolled up net (8), and **in that** said holders are mounted on the upper ends of the vertical support pales (3) and/or at the tensioned wire (10) running above said upper ends.

7. The system for opening and closing hail protection nets according to claim 6, **characterized in that** said holders (9) for the rods (70) and the rolled up net (8) consist of an upper part (9a) covering the entire length of the rod and the net and a lower part (9c) covering the rod and the net.

8. The system for opening and closing hail protection nets according to claim 6 or 7, **characterized in** both C shaped receptacles of said holders (9) can take on adjacent side-by-side positions, overlying positions or displaced positions.

9. The system for opening and closing hail protection nets according to claim 1, **characterized in that** the nets (8) can be arranged horizontally or with the same inclination as inclined rooftops.

10. The system for opening and closing hail protection nets according to claim 4, **characterized in that** in the case of multiple motors (M) which move multiple pairs of rods such motors are mechanically, electrically or hydraulically connected so that they operate synchronously.

11. The system for opening and closing hail protection nets according to claim 1, **characterized in that** for discharging of hail in the direction of the ground the individual nets (8) include openings (8a) having spaced joints (8b).

## Revendications

1. Système pour l'ouverture et la fermeture de filets de protection anti-grêle, lés de protection ou similaire dans les installations agricoles, présentant une structure d'appui composée de poteaux verticaux, de fils tendus parallèlement aux rangées de plantation, de fils tendus perpendiculairement à ces rangées de plantation, de fils disposés en diagonale et ancrés dans le sol et de filets ou lés, ces derniers pouvant être déployés au-dessus des plantes ou enroulés via des poulies, **caractérisé en ce que** chacun des différents filets (8) est disposé entre une paire de barres (7) montées (5s) aux deux extrémités de manière rotative (5r) sur des profilés transversaux (4) perpendiculaires aux rangées de plantation et aux filets (8), et **en ce que** chacun des filets (8) est fixé le long d'un des bords longitudinaux à l'une des barres (7) tandis que le bord longitudinal opposé est pourvu de minces câbles ou courroies (8c) espacés les uns des autres et dont la deuxième extrémité est fixée sur la barre (7) rotative correspondante.

2. Système pour l'ouverture et la fermeture selon la revendication 1, **caractérisé en ce que** les minces câbles (8c) ou courroies disposés sur le bord longitudinal du filet qui se trouve à l'opposé du bord longitudinal fixé à la barre rotative (7) est équipé de poids (13), de ressorts ou d'éléments élastiques destinés à maintenir le filet (8) en l'état tendu, pendant le déroulement ou l'enroulement sur la barre (7) rotative (5r), en position horizontale, en position inclinée comme une surface de toiture ou en position verticale, les minces câbles (8c) ou courroies étant guidés par le biais d'éléments de renvoi ou de poulies de renvoi (5d) prévus à un emplacement correspondant par rapport à la barre (7) rotative (5r), et **en ce que**, dans les deux zones d'angle aux extrémités du bord longitudinal des filets (8) sur lesquels agissent les poids (13), les ressorts ou les éléments élastiques, une ou plusieurs poulies (8d) sont fixées par l'intermédiaire d'éléments élastiques ou d'éléments de réglage de la tension, et passent (S) dans un profil de guidage (4a) placé sur la structure d'appui perpendiculairement à la longueur du filet.

3. Système pour l'ouverture et la fermeture selon la revendication 1, **caractérisé en ce que**, dans le cas du déroulement vertical du filet (8), celui-ci est directement muni de poids (13a) sur le bord longitudinal placé à l'opposé du bord longitudinal fixé sur la barre (7) rotative (5r), et **en ce que** lesdits poids (13a) sont guidés en coulissant sur les parties verticales de châssis de maintien (15) espacés les uns des autres et fixés à la structure d'appui le long de chaque rangée de plantation.

4. Système pour l'ouverture et la fermeture selon la revendication 1, **caractérisé en ce que** les barres (7) montées (5s) de manière rotative (5r) sont équipées, au moins sur une des extrémités ou au moins sur une zone médiane, d'une roue dentée (5) sur laquelle agit une chaîne (6) entraînée par un moteur (M) ou actionnée par un opérateur au moyen d'une manivelle et d'un engrenage réducteur, **en ce qu'**une seule chaîne (6) peut agir sur plusieurs roues dentées (5) pour assurer la rotation synchrone de plusieurs paires de barres (7), et **en ce que**, en cas de plusieurs moteurs (M) ou groupes d'entraînement manuel, celles-ci peuvent être reliées mécaniquement entre elles par un arbre de transmission.

5. Système pour l'ouverture et la fermeture selon la revendication 1, **caractérisé en ce que** les minces câbles ou courroies (8c) sont en matériau élastique, ou **en ce qu'**une partie de ceux-ci se compose d'un matériau élastique ou d'un ressort de traction, ou **en ce que** le filet (8) et/ou sa lisière sont élastiquement déformables dans le sens du déplacement (S).

6. Système pour l'ouverture et la fermeture selon la revendication 1, **caractérisé en ce que** la zone des barres (7) rotatives (5r) prévoit des supports (9) espacés les uns des autres composés d'un élément inférieur (9c) et d'un élément supérieur (9a) constituant des logements en forme de C adaptés pour accueillir lesdites barres (7) y compris le filet (8) enroulé, et **en ce que** lesdits supports (9) sont fixés sur les extrémités supérieures des poteaux support (3) et/ou sur le fil (10) tendu passant au-dessus desdites extrémités supérieures.

7. Système pour l'ouverture et la fermeture selon la revendication 6, **caractérisé en ce que** les supports (9) prévus pour les barres (7) et le filet (8) enroulé se composent d'une partie supérieure (9a) couvrant toute la longueur de la barre et du filet et d'une partie inférieure (9c) couvrant la barre et le filet.

8. Système pour l'ouverture et la fermeture selon les revendications 6 ou 7, **caractérisé en ce que** les deux logements en forme de C des supports (9) peuvent prendre, l'un par rapport à l'autre, une position juxtaposée, chevauchante ou décalée.

9. Système pour l'ouverture et la fermeture selon la revendication 1, caractérisé en ce les filets (8) peuvent être placés à l'horizontale ou être inclinés à la manière d'une surface de toiture.

10. Système pour l'ouverture et la fermeture selon la revendication 4, **caractérisé en ce que**, en cas de plusieurs moteurs (M) actionnant plusieurs paires de barres, les moteurs sont reliés de manière mécanique, électrique ou hydraulique de telle manière à pouvoir fonctionner de façon synchrone.

11. Système pour l'ouverture et la fermeture selon la revendication 1, **caractérisé en ce que** les différents filets (8), dans leur partie longitudinale médiane, présentent des ouvertures (8a) ainsi que des pièces de raccordement (8b) espacées les unes des autres permettant le déversement de la grêle en direction du sol.
